# EUROPEAN PATENT APPLICATION

(11) **EP 2 518 692 A2**
(43) Date of publication of application: **31.10.2012**
(21) Application number: 12150661.2
(22) Date of filing: 10.01.2012
(51) Int. Cl.: G06T 9/00

(54) **Body motion staff, producing module, image processing module and motion replication module**

(30) Priority: 29.04.2011 TW 100115138
(71) Applicant: National Cheng Kung University, Tainan City (TW)
(72) Inventor: Tsai, Ming-June, 704 North Dist., Tainan City (TW); Lee, Hung-Wen, 111 Shilin Dist., Taipei City (TW); Yang, Tzu-Wei, 704 North Dist., Tainan City (TW)
(74) Representative: 2K Patentanwälte Blasberg Kewitz & Reichel

(57) **Abstract**

A body motion staff is an image constructed by encoding the member motion information which is obtained from the motion of a multi-member body by a three-dimensional motion capturing apparatus. The member includes a link or a joint of the multi-member body.

## Description

### BACKGROUND OF THE INVENTION

### Field of Invention

The invention relates to a coded image, in particular, to a body motion staff (a motion-coded image), and an image processing module, a motion replication module, and a producing module thereof.

### Related Art

Although the three-dimensional human body motion tracker has been developed for a long time, the human body motion is still captured as two-dimensional stream images that can only be processed in the video, or digitally archived. As for the encoding of the body motion, the training process of the dance art is still recorded by the Labannotation, which records three-dimensional body motion in a two-dimensional way with five ingredients of body, space, effort, shape, and relationship. But, the question is, different people record the same motion in their individual ways. Besides, the ways of different actors interpreting the same record are not alike.

Nowadays, the analysis and research of human body motion is generally conducted based on the recognition of gesture characteristics displayed by video images, and just can be applied to the fields such as security surveillance and human-machine interface operation. Concerning valuable three-dimensional motion information of human bodies, such as authentic performance art compositions of CLOUD GATE DANCE COMPANY or Taijiquan, they can not be recorded and archived thoroughly like music is recorded by the staff. So, the body motion recorded can not be easily composed and edited minutely, and also can not be replicated by robots to make them do the same motion as human bodies for the purpose of serving people.

Therefore, it is an important subject to provide a motion-coded image that serves as a role of body motion staff (BMS) and an image processing module, a motion replication module and a producing module thereof that can record and archive the motion of human bodies thoroughly, modify the body motion minutely to create perfect motion, and reproduce the body motion on robots and other multi-member bodies.

### SUMMARY OF THE INVENTION

In view of the foregoing subject, an object of the invention is to provide a body motion staff (BMS), and an image processing module, a motion replication module and a producing module thereof that can minutely edit the body motion to compose the flawless motion, and replicate the motion on a robot or another multi-member body.

To achieve the above objective, according to the invention, a body motion staff is an image constructed by encoding the member motion information which is obtained from the motion of a multi-member body by a three-dimensional motion capturing apparatus. The member includes a link or a joint of the multi-member body.

In one embodiment, the BMS comprises a plurality of gray level rows, each of which is corresponding to each member and represents the time-varying movement of the member. For each gray level row, the variation of the movement is described by various gray levels. Besides, the gray level row can be replaced by the color level row, in which the variation of the movement is described by color or chromaticity. The movement pertains to member position, for example.

To achieve the above objective, according to the invention, an image processing module is used to process the BMS as described above and implement at least one function of image processing techniques, such as image filtering, interpolation, smoothing, segmentation, and editing. That is, the 3D body motion processing such as motion filtering, interpolation, smoothing, segmentation, and editing are fulfilled by the image processing techniques.

To achieve the above objective, according to the invention, a motion replication module receives a multi-member body appearance structured data and a (modified) body motion staff produced by the image processing module to produce a three-dimensional drawing data of the multi-member body corresponding to the multi-member body appearance structured data. The motion replication module can also have an interface to transmit the motion information of feature points to a real robot that constructed according to the structure of the multi-member body. Accordingly, the motion course of a multi-member body can be completely duplicated to another multi-member body displayed with a continuously three-dimensional dynamic drawing, or output the same motion to a real robot.

In one embodiment, the motion replication module includes a decoding unit, a forward kinematics unit and a three-dimensional drawing display unit. The decoding unit decodes the (modified) body motion staff to produce member motion information. The forward kinematics unit processes the member motion information by using the forward kinematics technique to produce the motion information of plurality of feature points. The three-dimensional drawing display unit produces the three-dimensional drawing data according to the motion information of the feature points and the multi-member body appearance structured data. The appearance structured data contains information of the multi-member body feature points (e.g. marker locations, geometric origins of links or joints). The feature points are pre-registered to the link geometry of the body so that once the feature points are known, the corresponding link locations are obtained. The feature point location is computed by a 3D motion capturing apparatus, and is stored in a format that records the rotation and translation from the world coordinate system.

To achieve the above objective, according to the invention, a producing module for generating the body motion staff as described above, wherein the three-dimensional motion capturing apparatus takes the motion images of the multi-member body to produce the motion information of plural feature points, comprises an inverse kinematics unit and an encoding unit. The inverse kinematics unit produces the member motion information according to the motion information of the feature points and a member structured data corresponding to the multi-member body by using the inverse kinematics. The encoding unit encodes the member motion information to produce the body motion staff. In the case of encoding link locations, any component of recoded motion information can be taken for consideration.

As mentioned above, body motion staff of the invention is an image constructed by encoding the member motion information which is obtained from the plural motion images taken over the motion of a multi-member body by a three-dimensional motion capturing apparatus. That is to say, the BMS consists of the member motion information that has been encoded into an image format. The member motion information involves the movement variation of the link location or joint angle with respect to the time. Accordingly, the motion course of a multi-member body is recorded in a manner of image like the staff records music. So the motion of the multi-member body is thoroughly recorded and archived with the certain format, and this also sets up the solid foundation for three-dimensional body motion dynamics analysis.

In addition, the invention also discloses the image processing module for processing the body motion staff. The image processing module can implement at least one function of image processing techniques, such as filtering, interpolation, smoothing, segmentation, and editing. Because the three-dimensional body motion is recorded as the encoded image, the motion can be treated subsequently by image processing techniques. Thereby, the treatment of the three-dimensional body motion is simplified, and the application of the body motion staff (BMS) can be greatly expanded. For example, an awkward action can be easily modified minutely to become a flawless smooth action.

Furthermore, the invention also discloses a motion replication module that can decode the body motion staff (or modified BMS). The motion replication module receives a multi-member body appearance structured data and a BMS produced by the image processing module to generate a three-dimensional drawing data of the multi-member body corresponding to the multi-member body appearance structured data. Accordingly, the motion course of a multi-member body (such as a human body) can be displayed with the three-dimensional drawing. The motion course of a multi-member body also can be completely replicated by another multi-member body (such as a humanoid robot, another human body, or a digital model) and then regenerate the same three-dimensional motions.

Besides, the invention also discloses a producing module that can implement an inverse kinematics calculation according to the locations of feature points and a member structured data of the multi-member body to generate the member motion information, and then encode the member motion information to generate the body motion staff.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic view of a body motion staff of a preferred embodiment of the invention;

FIG. 2 is a schematic view of the member structured data showing a human body particularly modeled;

FIG. 3 is a block diagram of an image processing module, a motion replication module, and a producing module of a preferred embodiment of the invention;

FIG. 4 shows the locations of the feature points of a multi-member body illustrated by a human body for example; The feature points are 3D markers that are pre-registered to the geometric mesh of the body.

FIG. 5 shows a body motion staff produced by the producing module of the invention and the body posture constructed by the three-dimensional drawing data of the motion replication module of the invention displayed on the screen; and

FIG. 6 shows a modified (edited) body motion staff which is produced by the image processing module processing the BMS in FIG. 5 using image filtering, interpolation, and smoothing techniques, and also shows the actor constructed by the three-dimensional drawing data that is reproduced by the motion replication module processing the modified body motion staff displayed on the screen.

### DETAILED DESCRIPTION OF THE INVENTION

The present invention will be apparent from the following detailed description, which proceeds with reference to the accompanying drawings, wherein the same references relate to the same elements.

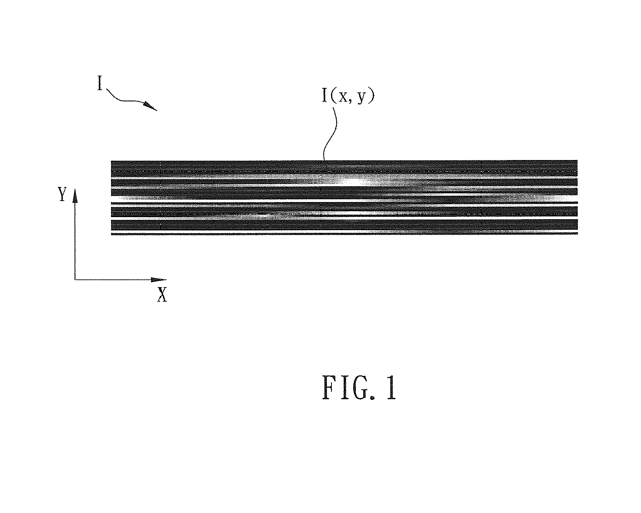

FIG. 1 is a schematic view of a body motion staff according to a preferred embodiment of the invention. The BMS is an image constructed by encoding the member motion information which is obtained from the plural motion images taken over the motion of a multi-member body by a three-dimensional motion capturing apparatus. The member includes a link or a joint of the multi-member body. The multi-member body can be a living body or a non-living body. The living body is such as a human body, an animal, etc. The non-living body is such as a robot or a digital model.

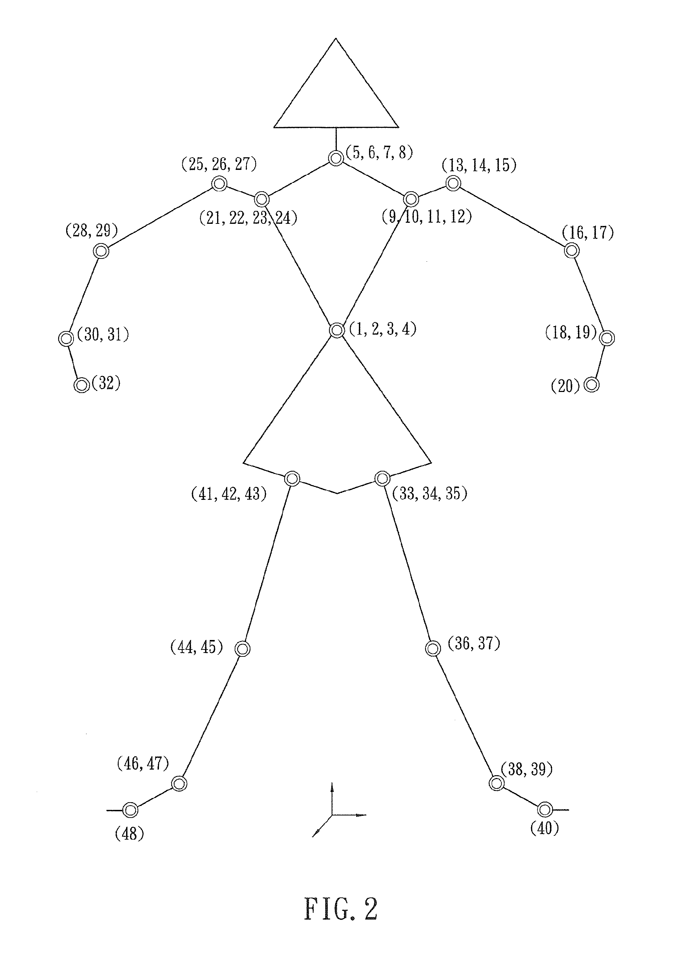

The body motion staff is illustrated below by taking a human body as an example. FIG. 2 is a schematic view showing the member structured data which has been modeled particularly. A human body is mainly divided into five portions of a trunk and four limbs. A trunk can be divided into a head, a chest, a waist and a pelvis (hip). Regardless of fingers, toes, and other smaller joints, the motion of the whole body can be simulated by using 23 links. Pertaining to the degrees of freedom (DOF), the head has three rotational DOF and one translational DOF relative to the chest (i.e. cervical joint); two upper arms have three rotational DOF relative to the shoulders respectively; and two thighs have three rotational DOF relative to the pelvis respectively. Besides, the elbow and the wrist joints of the arm, and the knee and the ankle joints of the leg provide two rotational DOF, respectively. Totally 48 DOF, counting the rotational DOF of the fingers and toes, can be used to record the joint parameters of every gesture of the human body. In FIG. 2, the line segments represent the links, and the "□" figures represent the locations of the joints. The model describing the human body as shown in FIG. 2 is just for illustration as an example, and not for limiting the scope of the invention.

In the embodiment, the motion course of the 48 joint parameters is encoded to produce the body motion staff as shown in FIG. 1. The BMS includes a plurality of gray level rows, each of which is corresponding to a member (such as a joint or a link) and represents the time-varying movement of the member. Accordingly, the elements of the BMS can be represented as (x, y), wherein "y" means the y^{th} gray level row corresponding to one of the joint parameters and "x" means the x^{th} gray level value corresponding to a posture at the moment of a period, For example, "y=1" represents the time history of the first joint parameter. From "x" to "x+1" is a certain time interval, e.g. 1/30 second. The movement pertains to member position, such as the link location or the joint angle.

Overall, after a three-dimensional motion capturing apparatus takes a plurality of motion images over the motion of a multi-member body (modeled as shown in FIG. 2 for example), the motion images are analyzed by the inverse kinematics algorithm to produce the member motion information of the joints of the multi-member body through calculation. The member motion information, of the above 48 joints for example, includes the time-varying angle values. Subsequently, the member motion information is encoded to produce the BMS as shown in FIG. 1 (FIG. 1 only shows the first 29 joints, i.e. y=29).

If a joint is recorded in 256 gray levels, the angle of the joint only takes 1 byte for recording, and that is, a posture of a human model of 48 joints just takes 48 bytes. In the format of 30 frames per second (i.e., the three-dimensional motion capturing apparatus takes 30 images per second), just 86.4 Kbytes are needed as storage space for one minute. The file size can be further reduced by using conventional file compression utilities such as Winzip. This shows amazing compactness of information. Besides, even though the information encoding is so compact, the resolution of joint angle also keeps well. Taking the elbow joint as an example, it can rotate probably in the range of 150 degrees (no joint of the human body can rotate in a whole cycle). So, when 256 gray levels are used to record the angle value of the elbow joint, the resolution can reach about 0.58 (150/256) degree/gray level. The resolution is sufficient and accurate enough for three-dimensional viewing and for bio-mechanic analysis.

In the case of biological dynamics analysis demanding higher resolution, two bytes can be used for the encoding of one joint, so that the resolution can reach 0.00229 (150/2¹⁶) degree/gray level, which far exceeds the requirement of motion analysis of human bodies.

In the above, the gray level value is used as the element of the body motion staff. Otherwise, the color, the chromaticity, or their combination can be used to the element of the body motion staff. In this case, the body motion staff includes a plurality of color level rows, each of which is corresponding to each member and represents the time-varying movement of the member. The movement here pertains to member position for example.

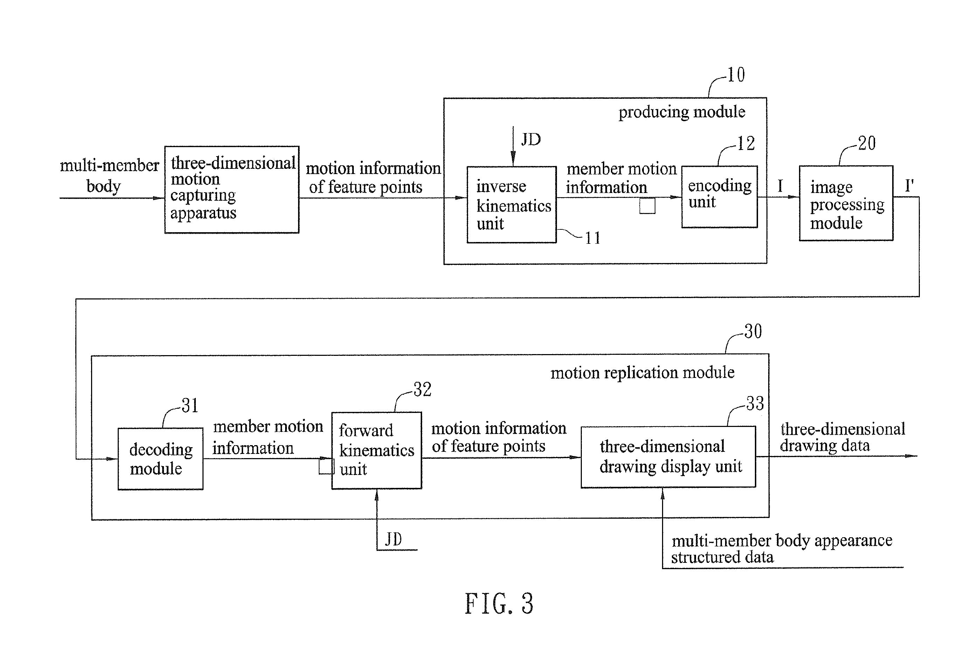

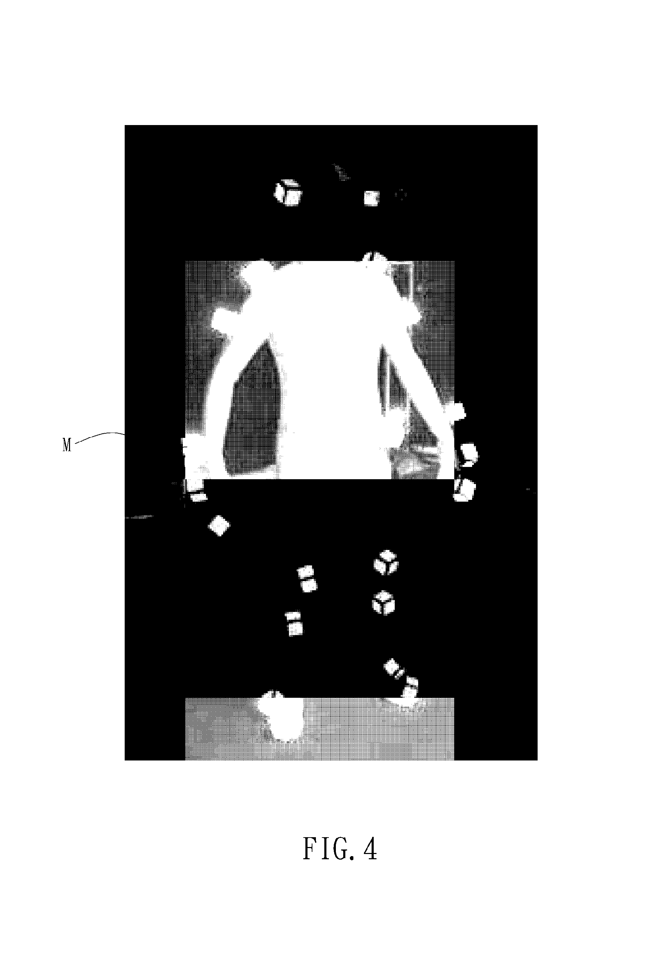

FIG. 3 is a block diagram of an image processing module, a motion replication module, and a producing module according to a preferred embodiment of the invention. As shown in FIG. 3, the producing module 10 of the motion-coded image includes an inverse kinematics unit 11 and an encoding unit 12. The three-dimensional motion capturing apparatus takes plural motion images of a multi-member body to produce the motion information of plural feature points. FIG. 4 shows the locations of feature points on a human body, for example. Herein, the feature points are locations of the markers M. Otherwise, it can be used as a feature point that the relative position of the marker M on the human body is stationary, such as the point stationary referring to the geometric origin of a link. During the construction of the geometric mesh of the body, the markers are pre-registered to the corresponding members of the body. Therefore, once the markers are calculated, the feature points will be obtained and the members can be thus drawn so as to construct the drawing of the body posture at a certain moment.

When the human body moves, the markers M moves therewith. In the meantime, the three-dimensional motion capturing apparatus takes and analyzes the images of the markers M to produce the motion information of the feature points. The motion information of the feature points contains positions of the members that describe the body shape.

The inverse kinematics unit 11 produces the member motion information according to the motion information of the feature points and a member structured data JD corresponding to the multi-member body (such as the model shown in FIG. 2) by using the inverse kinematics. That is to say, the member motion information can be obtained from the motion information of the feature points with the member structured data and through the calculation of the inverse kinematics. The member motion information includes, for example, the time-varying angle of the joints. The encoding unit 12 encodes the member motion information to produce the motion-coded image. The features of the member motion information and the motion-coded image are illustrated clearly as the above embodiments, so the detailed descriptions thereof are omitted.

After being produced by the producing module 10, the body motion staff can be treated by image processing techniques to edit the BMS or compose another new BMS. The image processing module 20 can implement at least one function of image interpolation, smoothing, filtering, segmentation, editing, or other image processing. The functions like image filtering, interpolation, and smoothing can detect and filter out unreasonable motion segments, and fill the blank segments by using continuous functions so that all the motion segments are smoothly connected. The new BMS can be composed according to the segmented motion primitives from existing BMS. For example, several particular motion segments are drawn out from the existing BMS, and the portions between the particular motion segments are refilled by the image interpolation to produce a new BMS. Otherwise, the motion of each member can either be directly edited or arranged to create a new body motion. After image processing, the BMS I becomes the modified BMS I'.

As shown in FIG. 3, according to the modified BMS I' and a multi-member body appearance structured data, a motion replication module 30 of the invention produces a three-dimensional drawing data of the multi-member body corresponding to the multi-member body appearance structured data. The so-called multi-member body appearance structured data is the structured data for describing the appearance of a multi-member body (such as a human body). The multi-member body appearance structured data can be produced by defining the body feature point data (according to the segments of the links, joints, and their feature positions for example) which are extracted through the three-dimensional scanning to the human body. The multi-member body appearance structured data can be corresponding to a human body, a robot, a digital model, or other kind of body shape.

The motion replication module 30 includes a decoding unit 31, a forward kinematics unit 32, and a three-dimensional drawing display unit 33. The decoding unit 31 decodes the modified body motion staff I' to produce the member motion information of the joints. The forward kinematics unit 32 processes the member motion information by using the forward kinematics to produce the motion information of a plurality of the feature points. Herein, the forward kinematics unit 32 produces the motion information of the feature points according to the member motion information and the member structured data JD corresponding to the multi-member body. The three-dimensional drawing display unit 33 produces the three-dimensional drawing data according to the motion information of the feature points and the multi-member body appearance structured data. The three-dimensional drawing data is displayed on the screen. Herein, the three-dimensional drawing display unit 33 can include a registration-integration unit, which integrates the motion information of the feature points and the multi-member body appearance structured data to show the real shape of body motion of the multi-member body in a manner of data replication. The characteristics of the member motion information and the motion information of the feature points are illustrated clearly as the above embodiments, so the detailed descriptions thereof are omitted. In other cases, the motion replication module can also have an interface (not shown) to transmit the motion information to a real robot that constructed according to the structure of the multi-member body, so the motion course of a multi-member body can be completely duplicated to the robot.

When the three-dimensional drawing display unit 33 operates according to a multi-member body appearance structured data, the motion information of the feature points is poured into the multi-member body to produce a new three-dimensional drawing data. The three-dimensional drawing data can be displayed in a manner of fast motion, slow motion, forward, rewind, step forward, step rewind, pause, zooming in, zooming out, or viewpoint changing.

The invention at least has the features as below:

1. In the invention, the multi-member body appearance structured data and the motion-coded image are integrated to display the vivid and lifelike motion. Besides, the multi-member body appearance structured data and the motion-coded image can be used independently, which means the body of one can do the motion of another. For example, the robot can replace the human and do the same motion as the human so as to enter into the dangerous area to perform important tasks, such as disaster tackling in nuclear power plants.

2. The motion-coded image (BMS) to body motion is just like the staff to music. The smoothness of the motion can be observed by viewing the BMS that stores the movement (such as angle) of human joints. Besides, unreasonable movement can be filtered out by the image processing technology, so that the BMS can be edited or even created.

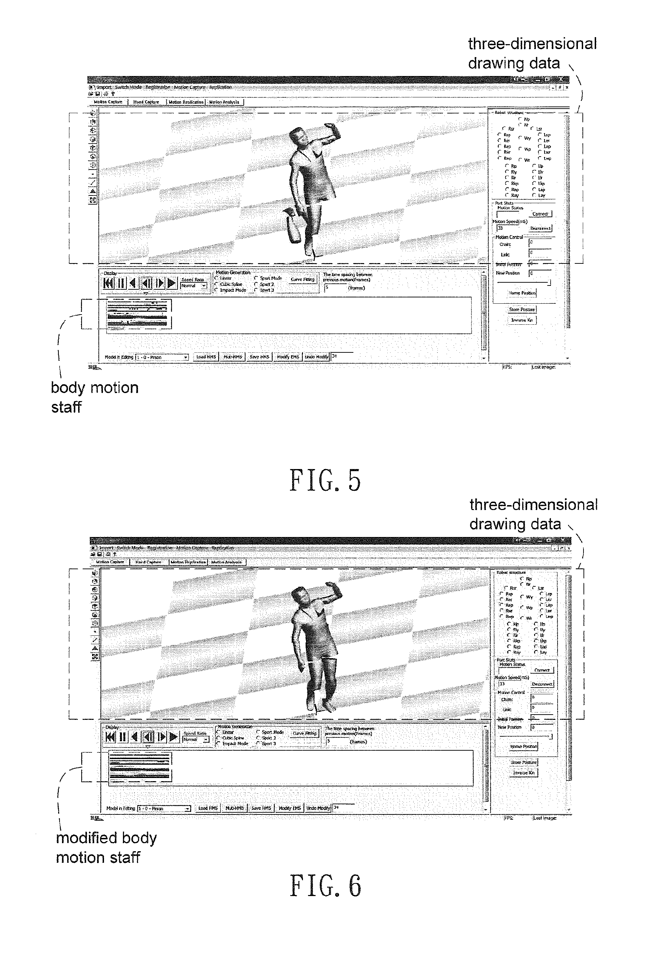

FIG. 5 shows the motion-coded image produced by the producing module and the body posture constructed by the three-dimensional drawing data of the motion replication module displayed on the screen. FIG. 6 shows the modified BMS which is produced by the image processing module 20 processing the BMS in FIG. 5 using image processing techniques (e.g. gray level image filtering, interpolation, and smoothing). FIG. 6 also shows the same actor's image constructed by the three-dimensional drawing data that is produced by the motion replication module 30 processing the modified BMS. From the three-dimensional drawing data in FIG. 5, it is obvious that the left foot of the human body is unnatural and some abrupt pixels appear in some gray level rows of the BMS. But, after image processing, the left foot of the human body in FIG. 6 is corrected to the natural position and the abrupt pixels had been smoothed in every gray level row of the modified BMS.

In summary, a body motion staff of the invention is an image constructed by encoding the member motion information which is obtained from the plural motion images taken over the motion of a multi-member body by a three-dimensional motion capturing apparatus. That is to say, the BMS consists of the member motion information that has been encoded. The link motion information is computed by marker location with respect to time frames. The member motion information involves the movement variation of the joints, especially the defined joints. Accordingly, the motion course of a multi-member body is recorded in a manner of image format like the staff records music. So the motion of the multi-member body is thoroughly recorded and archived with a very compact format, and this also sets up the solid foundation to three-dimensional bio-mechanics analysis.

In addition, the invention also discloses the image processing module for processing the body motion staff. The image processing module can implement at least one function of image filtering, interpolation, smoothing, segmentation, editing, or other image processing technique. Because the body three-dimensional motion is recorded as the encoded image, the motion can be treated subsequently by image processing. Thereby, the treatment of the three-dimensional body motion is simplified, and the application of the motion-coded image can be greatly expanded. For example, the awkward action can be modified minutely to become a flawless smooth action.

Furthermore, the invention also discloses a motion replication module that can decode the (modified) body motion staff. The motion replication module receives a multi-member body appearance structured data and a BMS produced by the image processing module to generate a three-dimensional drawing data of the multi-member body corresponding to multi-member bodies real shape. Accordingly, the motion course of a multi-member body (such as a human body) can be displayed with the three-dimensional drawing. The motion course of a multi-member body also can be completely duplicated to another multi-member body (such as a robot, another human body or a digital model) and then replicates the same three-dimensional motion.

Besides, the invention also discloses a producing module that can implement a calculation according to the motion information of the feature points and a member structured data of the multi-member body to produce the member motion information, and then encode the member motion information to produce the body motion staff.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A body motion staff (BMS), which is an image constructed by encoding the member motion information which is obtained from the motion of a multi-member body by a three-dimensional motion capturing apparatus, wherein the member includes a link or a joint of the multi-member body.

2. The body motion staff as recited in claim 1, comprising:
a plurality of gray level rows, each of which is corresponding to each member
and represents the time-varying movement of the member.

3. The body motion staff as recited in claim 1 , comprising:
a plurality of color level rows, each of which is corresponding to each member
and represents the time-varying movement of the member.

4. The body motion staff as recited in claim 2, wherein the movement pertains to the member position.

5. The body motion staff as recited in claim 3, wherein the movement pertains to the member position.

6. An image processing module (20), processing the body motion staff as recited in any of claims 1 to 5, and implementing at least one function of image filtering, interpolation, smoothing, segmentation, and editing.

7. A motion replication module (30), according to a multi-member body appearance structured data and a body motion staff or a modified body motion staff produced by the image processing module as recited in claim 6, producing a three-dimensional drawing data of the multi-member body corresponding to the multi-member body appearance structured data.

8. The motion replication module as recited in claim 7, comprising:
a decoding unit (31), decoding the body motion staff or the modified body
motion staff to produce a member motion information;
a forward kinematics unit (32), processing the member motion information by
using the forward kinematics to produce the motion information of a plurality of feature points; and
a three-dimensional drawing display unit (33), producing the three-dimensional
drawing data according to the motion information of the feature points and the multi-member body appearance structured data.

9. The motion replication module as recited in claim 8, wherein the motion information of the feature points contains positions of the members that describe the body shape.

10. A producing module (10) for producing the body motion staff as recited in any of claims 1 to 5, wherein the three-dimensional motion capturing apparatus takes the motion images of the multi-member body to produce the motion information of plural feature points, comprising:
an inverse kinematics unit (11), producing member motion information
according to the motion information of the feature points and a member structured data corresponding to the multi-member body by using the inverse kinematics; and
an encoding unit (12), encoding the member motion information to produce the
body motion staff.
